# EUROPEAN PATENT SPECIFICATION

(11) **EP 3 182 674 B1**
(45) Date of publication and mention of the grant of the patent: **13.03.2019**
(21) Application number: 15199786.3
(22) Date of filing: 14.12.2015
(51) Int. Cl.: H04L 29/08, H04L 29/06

(54) **SYSTEM FOR SECURE COMMUNICATION IN ROBOT-RETROFITTING**
SYSTEM FÜR SICHERE KOMMUNIKATION IN DER ROBOTERNACHRÜSTUNG
SYSTÈME POUR COMMUNICATION SÉCURISÉE DANS UN RÉTROFIT DE ROBOT

(43) Date of publication of application: 21.06.2017
(73) Proprietor: Deutsche Telekom AG, 53113 Bonn (DE)
(72) Inventor: PEYLO, Christoph, 49401 Damme (DE); SCHMIDT, Aubrey-Derrick, 16562 Hohen Neuendorf (DE); STEFFENS, Ernst-Joachim, 13089 Berlin (DE)
(74) Representative: Vossius & Partner Patentanwälte Rechtsanwälte mbB

(56) References cited:
- EP-A1- 2 187 592
- US-A1- 2014 281 501
- US-A1- 2015 046 697

## Description

### Field of the Invention

The present invention relates to a system that retrofits industrial robots to electronically communicate with remote peers in a secure way. The system is based on security features provided by an Acorn Reduced Instruction Set Computer (RISC) Machine (ARM) platform enhanced by security functionality that address every relevant interface of the system. Key building blocks of the system include an industrial robot, a communication module, and a remote input device that are connected using security functions.

### Background

(Steam) Machines, assembly lines, and computers lead the way to the fourth generation of industrial revolution: Highly dynamic production lines in "Smart Factories" using cyber physical systems (see https://en.wikipedia.org/wiki/Cyber-physical_system) interconnected through computer networks will shape the way we will produce goods in the near future. Advantages can be seen in reduced costs, Just-in-time (see https://en.wikipedia.org/wiki/Just-in-Time_Manufacturing) manufacturing, and highly customized production even for very small series.

To benefit from this concept, older production plants and especially industrial robots can be "retrofitted" (see https://en.wikipedia.org/wiki/Retrofitting), in order to be able to communicate via computer networks. Communication can include remote programming and control of the robots which might even be sold as a service.

Despite the advantages, threats have to be tackled when developing solutions within the "Industry 4.0" domain. Due to ubiquitous interconnectivity, attacks threatening confidentiality, integrity, and availability of these computer-based systems play a central role when considering security of such systems. Harming one of these security goals can result in high costs due to sabotage or destroyed production. Additionally, robots can be considered very dangerous because of high forces being used for lifting heavy items or dangerous tools being used by the robots. Especially mobile robots require special attention since their movement is not limited as in the case of stationary robots. Computer attacks and sabotage can lead to lethal injuries caused by robots "gone wild".

Furthermore, attacks against industry facilities continue to spread as malware in the past showed. Stuxnet (see https://en.wikipedia.org/wiki/Stuxnet), and Duqu (see https://en.wikipedia.org/wiki/Duqu), are well-known for this while indicating the high professionalism and sophistication in the field targeted industrial computer attacks. Often, so called "Zero-day" (see https://en.wikipedia.org/wiki/Zero-day_%28computing%29) vulnerabilities are used for attacking other systems. Zero-day vulnerabilities are of special value since they are only known by the attacker and developer of the attack, cannot be detected in most cases, and have very high prices. This makes such attacks themselves very expensive when narrowing the range of possible attack originators.

These kinds of attackers are probably also able to attack communication based on common cellular phone communication protocols where this and all related technology still remains very interesting due to its global distribution and exceptionally good fit for robot retrofitting.

Therefore, dedicated solutions targeting these problems are required in this field for protecting against respective threats.

ARM® TrustZone® technology is a system-wide approach to security for a wide array of client and server computing platforms, including handsets, tablets, wearable devices and enterprise systems. Applications enabled by the technology are extremely varied but include payment protection technology, digital rights management, BYOD, and a host of secured enterprise solutions.

TrustZone technology is tightly integrated into Cortex®-A processors but the secure state is also extended throughout the system via the AMBA® AXI™ bus and specific TrustZone System IP blocks. This system approach means that it is possible to secure peripherals such as secure memory, crypto blocks, keyboard and screen to ensure they can be protected from software attack.

Devices developed with TrustZone technology, according to the recommendations of the Trusted Base System Architecture specification, enables the delivery of platforms capable of supporting a full Trusted Execution Environment (TEE) and security aware applications and secure services, or Trusted Applications (TA). A Trusted Execution Environment is a small secure kernel, and normally developed with standard APIs, developed to the TEE specification evolved by the Global Platform industry forum.

TrustZone enables the development of separate Rich Operating System and Trusted Execution Environments by creating additional operating modes to the Normal domain, namely a, Secure domain and the Monitor mode. The Secure domain has the same capabilities of the normal domain while operating in a separate memory space. The Monitor mode acts as a virtual gatekeeper controlling migration between the domains (see http://www.arm.com/products/processors/technologies/trustzone/).

Open Platform Communications Unified Architecture (OPC UA) is an industrial Machine to Machine (M2M) communication protocol for interoperability developed by the OPC Foundation. It is the successor to Object Linking and Embedding (OLE) for process control (OPC). Although developed by the same organization, OPC UA differs significantly from its predecessor. The Foundation's goal for this project was to provide a path forward from the original OPC communications model (namely the Microsoft Windows only process exchange COM/DCOM) to a cross-platform service-oriented architecture (SOA) for process control, while enhancing security and providing an information model.

After more than three years of specification work and another year for a prototype implementation, the first version of the Unified Architecture was released in 2006. The current version of the specification is on 1.02 (see https://en.wikipedia.org/wiki/OPC_Unified_Architecture).

A baseband processor (also known as baseband radio processor, BP, or BBP) is a device (a chip or part of a chip) in a network interface that manages all the radio functions (all functions that require an antenna); however, this term is generally not used in reference to Wi-Fi and Bluetooth radios. A baseband processor typically uses its own RAM and firmware (see https://en.wikipedia.org/wiki/Baseband_processor).

US 2014/281501 (A1) relates to a method of controlling access of an application to a computing asset and/or resource and an electronic apparatus implementing the same.

### SUMMARY OF THE INVENTION

The present invention is directed to a system that provides a security solution addressing the aforementioned problems related to retrofitting industry robots. Accordingly there is provided a system as detailed in the claims that follow. A solution is created, which consists of three main components, namely; one or more robots (to be retrofitted); a communication module providing security mechanisms supporting secure communication (key component of this solution); and an (robot) input device, which enables users to input commands or plans to the robot.

Each robot uses a controller in order to function. In this case, the controller needs to support at least standard computer communication in order to be able to attach the communication module to it. In all other cases, a transcoding component is required which is able to translate computer-based commands and plans in mechanical operations of the robot.

The communication module is the key component of this solution. Each robot may have its own communication module. It is connected to the robot by wire using one of the available physical wired robot interfaces. The hardware architecture of the communication module supports security functions by strictly separating functional environments based on hardware features. This makes attacks on it very difficult if not even impossible. The communication module enables the robot to receive commands and operational plans from remote entities securely while being able to report status messages and monitoring data vice-versa. Part of the communication module is a secure smartcard which stores relevant secrets and certificates for identification and authentication purposes. Services offered by the communication module are hosted on a service platform which will be used by input devices. The communication module uses common mobile communication protocols and services known from cellular phone systems. Since the baseband processor and related communication system faces several serious threats (see https://www.usenix.org/conference/wootl2/workshop-program/presentation/weinmann), dedicated security mechanisms are implemented to prevent attacks.

The (robot) input devices use installed clients to connect to the service platform hosted on the communication module. Connectivity is established using common mobile communication protocols and services similar to the communication module. The input device itself must run on a secured platform, allowing secure execution of all related applications. In order to change robot actions, a user needs to have the corresponding rights and a cryptographically signed change plan which is successfully transferred to the robot. Applications / functions required includes Plan and Action editor / tools; Signing / Encryption / Certificate Handling; and Access Control / User Management.

Additionally, secure storage of certificates / secrets is also required for users of the input device. Secure storage can be provided by user-related smartcard or other appropriate protection means.

Embodiments disclosed herein may provide a system of retrofitting an industrial robot for secure communication. The system may comprise an industrial robot; a communication module configured to provide security mechanisms supporting secure communication; a security smartcard configured to be integrated into the communication module; and a robot input device configured to allow user to input commands to the robot.

The industrial robot may comprise a plurality of robots. The industrial robot may be configured to be mechanically coupled to the communication module by a wire using a wired robot interface. The industrial robot may be configured to be computer controllable via a transcoding device. The transcoding device may be configured to translate computer commands into mechanical actions of the industrial robot.

The communication module may comprise a secure hardware platform that is configured to separate computer operations into a plurality of different execution domains in order to increase the security of the system.

The secure hardware platform may be configured to run a secure operating system, Trusted Execution Environment, TEE, for executing privileged operations; and a normal operating system, Rich Execution Environment, REE, for performing uncritical operations.

The communication module may comprise a secure system, which includes a secure boot loader chain function; a full disk encryption function; a role-based access control function; a certificate handling function; and a communication authentication and encryption function.

The security smartcard may comprise a two factor authentication, 2FA, (see https://en.wikipedia.org/wiki/Two-factor_authentication) and may be configured to provide cryptographic operations.

The cryptographic operations may comprise a Random Number Generator, RNG, for appropriate level of randomness; a de/encryption operation; a secure storage of secrets or certificates within a dedicate secure storage area on the security smartcard.

A service platform may be configured to be installed on the normal operating system, Rich Execution Environment, REE, and further configured to host services connected to service and function forwarders that lead to services and functions being offered by the secure operating system, Trusted Execution Environment, TEE.

The robot input device may be configured to create new action plans for the industrial robot; sign input commands for being set to the industrial robot; receive status and/or monitoring messages from the robot and/or connect to corresponding services; and handle secure certificate by using the smart card.

The communication module may be adapted to use an ARM cortex-A hardware, which comprises of an ARM TrustZone security functionality. The communication module may further comprise a baseband processor for providing baseband protection. The baseband processor may include a baseband firewall; a baseband monitor; an OTA update module; a baseband integrity checker and an unsolicited messages detector. The communication module may comprise a plurality of boot loaders, wherein each boot loader comprises a cryptographic checksum of a previous boot loader, and wherein said cryptographic checksum is adapted to be verified at each start-up.

The system may further comprise a Mutual Secure Sockets Layer, SSL, configured to provide mutual authentication between the communication module and the robot input device. The system may be configured to provide mandatory communication encryption.

The system may further comprise a Secure/Multipurpose Internet Mail Extensions, S/MIME, for asynchronous communication such as status notification from communication module to authorized administrators.

### BRIEF DESCRIPTION OF THE DRAWINGS

Further details, aspects and embodiment of the invention are illustrated by way of example, and not by limitation, in the figures of the accompanying drawings.
Figure 1 is an illustration of the three main components according to an embodiment of the present invention.
Figure 2 is a layered view of an industrial robot according to the embodiment of the present invention.
Figure 3 is a generic architecture of the communication module according to the embodiment of the present invention.
Figure 4 is an illustration of the robot input device according to the embodiment of the present invention.
Figure 5 illustrates the Communication Module Architecture based on ARM according to the embodiment of the present invention.
Figure 6 is a block diagram illustrating the flow of the boot chain security according to the embodiment of the present invention.

### DETAILED DESCRIPTION OF THE INVENTION

Hereinafter, the generic architecture of the system according to an exemplary embodiment of the present invention will be described in detail with reference to the accompanying drawings.

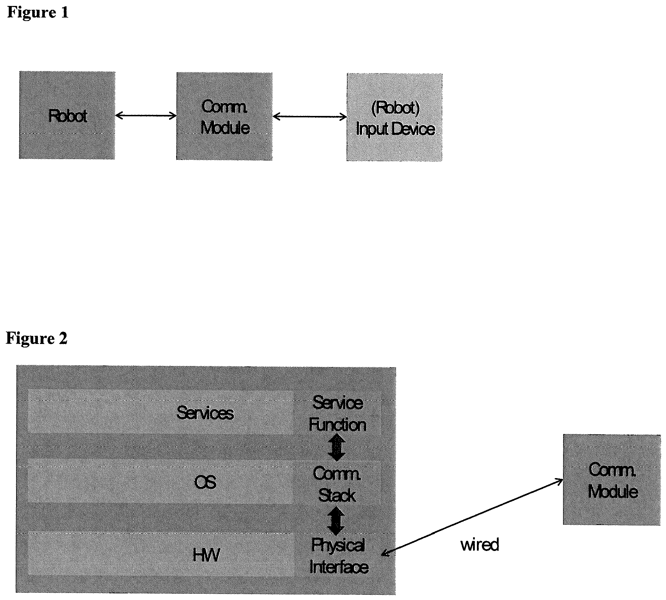

The system comprises three main components namely, the robot, the communication module and the robot input device as shown in Figure 1.

An embodiment of present invention will be described by considering a single robot to be retrofitted. This robot may already be computer controlled or may be computer controlled via a transcoding device. The transcoding device will translate computer commands into mechanical actions of the robot. The robot may be stationary or mobile. In most cases, the robot may be able to perform various actions similar to a Kuka KRC1 or 2 series robot (see https://en.wikipedia.org/wiki/KUKA).

The robot may be connected to the communication module by wire and may be situated in a trustworthy and well-controlled environment (facility).

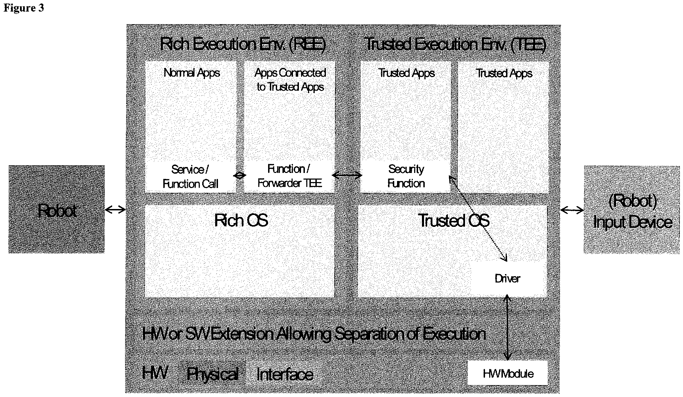

The communication module, as illustrated in Figure 3, uses a secure Hardware platform for providing secure services. This platform is able to strictly separate computer operations into different execution domains increasing security of such systems significantly. This kind of platform runs a secure operating system, Trusted Execution Environment, TEE, executing privileged operations and critical operations, especially encryption related functions, while an additional normal operating system, Rich Execution Environment, REE, can perform uncritical operations. The separation of execution domains is based on HW features of the platform.

Alternative platforms may be chosen for achieving similar security level. Microkernel-based approaches can use software-based virtualization for separating execution environments.

Based on this platform, a secure system may be built comprising the following security functions: Secure boot loader chain, Full disk encryption, Role-based Access Control (and corresponding functionality), Certificate handling, and Communication authentication and encryption.

A security smartcard may be integrated into the communication module, the smart card comprising a two factor authentication (2FA) and provides cryptographic operations. The main concept for this security feature is such that there is a safe place where sensitive data can be stored safely. This is particularly important in asymmetric cryptosystem in order to prevent the private key from being published in any form. The smart card is able to support this function by offering features that include the private key in operations and which are not exposed during the operations. Hence, achieving the desired condition that, other than the operation results obtained based on the key, the private key never leaves the domain of the smart card. Normally, private keys are stored somewhere in the file system and this can be accessed in a successful attack on the relevant system concerned. However, with a smart card, this is extremely difficult and in fact partially impossible to be accessed. The smart card may be integrated via the ARM Trust Zone TEE.

The cryptographic operations may include a Random Number Generator (RNG) (see https://en.wikipedia.org/wiki/Random_number_generation) for appropriate level of randomness, a de-/encryption operation that can be used by the operating system and services, and secure storage of secrets / certificates within a dedicated secure storage area on the card.

A service platform may be installed on the Rich Execution Environment side. It may host services that are connected to service and function forwarders that lead to services and functions being offered by the Trusted Execution Environment such as Communication with robot (Wired or TCP/IP or others); Communication with (robot) input device using Wireless, 2.5-5G based, Encrypted and/or Mutual authenticated; Handling Cryptographic certificates; Providing security functionality using Communication encryption and/or Email/messaging encryption and Robot monitoring with Manufacturing status and Robot system status.

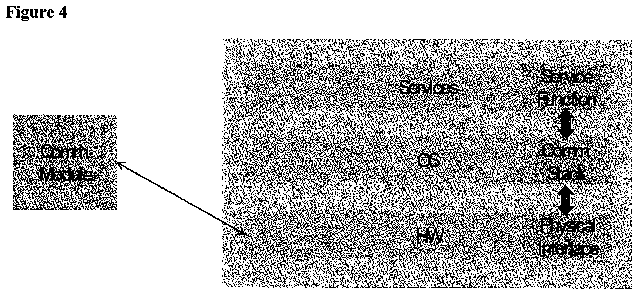

Figure 4 is an illustration of the robot input device, which represents a secure execution environment for service clients being connected to the communication module. A possible platform for installing and using corresponding service client would be a SiMKo 3 Tablet or similar system providing an appropriate level of security.

The robot input device can be used for creating new actions plans for robots, signing input commands for being sent to the robot, receiving status/monitoring messages from the robot or for connecting to corresponding services, and secure certificate handling which uses smartcard or other secure approach.

Details on the architecture and related security-relevant functions and components are presented.

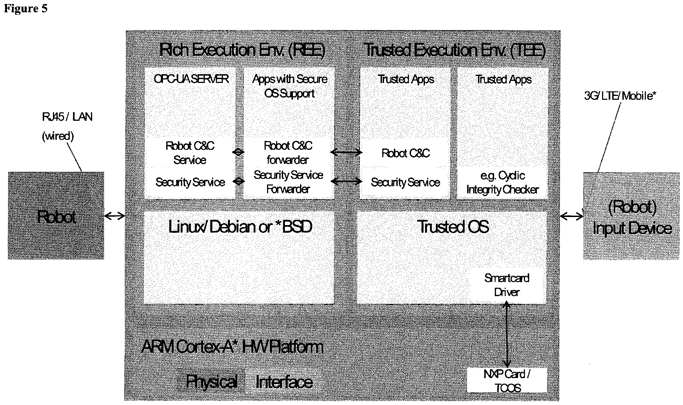

An embodiment of the present invention as shown in Figure 5, may use an ARM Cortex-A* hardware, which further allows the use of the ARM TrustZone security functionality.

Using this platform, execution environments get separated by hardware functions (CPU) granting strictly separated execution domains. In the ARM context, mainly two different execution domains are considered, the Trusted Execution Environment (TEE) and the Rich Execution Environment (REE).

The Trusted Execution Environment (TEE) comprises of protected execution domain; operating system bases on dedicated implementation of an TEE conformant to ARM TrustZone API; sensitive functions are executed here; access to TEE only via connected applications with TEE support and includes smartcard driver for accessing the secured areas of the smartcard. The smart card may be manufactured by NXP (http://www.nxp.com/products/identification_and_security/smart_card_ics/) while the operating system is based on TeleSec Chipcard Operating System, TCOS, (see https://www.telesec.de/en/tcos-en/product -information).

The Rich Execution Environment (REE) may be considered as normal operating system and may be based on a secure Linux / Unix variant, e.g. openBSD (see http://www.openbsd.org/). The Rich Execution Environment (REE) may use OPC-UA as service platform. The Rich Execution Environment (REE) may contain applications that implement TrustZone API for connecting to TEE Trusted Apps such as (i) the Robot Command and Control (C&C); this service enables (robot) input device users to access services including authentication, monitoring, robot inputting (sending new plans or commands) or other related operations and (ii) Security Services or any services related to security, e.g. FDE, communication encryption, authentication, certificate handling / PKI-related operations.

Furthermore, the solution has all functions and drivers removed that are not required for its operations. This reduces the attack surface additionally, besides that TEE-related applications are not directly accessible from the outside.

For providing appropriate protection, the interfaces are protected as defined in the following. All unrequired interfaces are deactivated on hardware (physically) and software (configuration, removal of driver) level.

The external interfaces between the Robot and the Communication Module may comprise a UART via RS232; RJ45/LAN or other common interfaces. The external interfaces between the Communication Module and the (Robot) Input Device may be via a Wireless Mobile Network Protocol, e.g. LTE.

The internal interfaces between the Application Processor (AP) and the Baseband Processor may be protected via additional security measures. The internal interfaces between the HW, the TEE and the REE may be protected via TrustZone.

The system uses several methods in order to protect against baseband-based attacks. These measures apply to an area which is not shown on the figures in this document. All communication devices that will use mobile networks for communication provide a separated environment running a dedicated operating system using dedicated hardware for using mobile phone network services. This environment is connected through an interface to the rest of the system. The baseband processor includes a baseband firewall; a baseband monitor; an OTA update module; a baseband integrity checker and an unsolicited messages detector.

The Baseband firewall may comprise a list of trusted Base Transceiver Stations (BTS) which are white listed; while all others are black listed and cannot be used.

The Baseband monitoring may comprise "Suspicious" activity related to any baseband function is indicated and the detection of fake BTS.

OTA Baseband updates may not be permitted and only wired / offline updates allowed.

The Baseband Integrity Checking may comprise Modem Image checksum being checked on every boot up and corresponding checksum being stored on the Smartcard.

The Detection of unsolicited Messages may comprise indicating the Silent / Type 0 SMS messages.

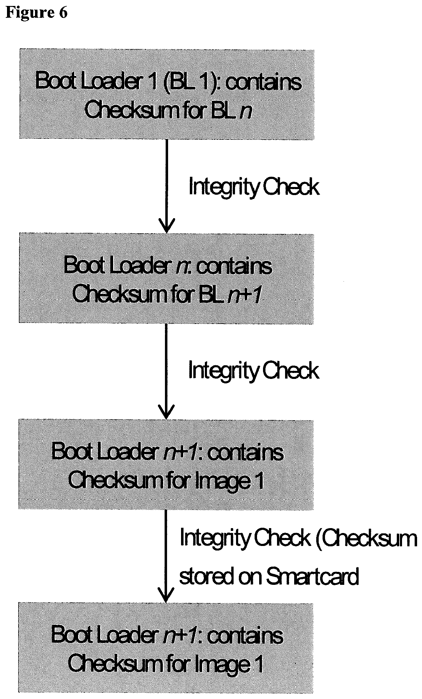

Each boot loader contains the cryptographic checksum (SHA256 or higher) of the follow-up boot loader. This checksum as shown in Figure 6, gets checked on each startup before the corresponding boot loader is started. Inability to verify the corresponding checksum will lead to a system halt.

Relevant data is stored encrypted within the storage media. This encryption must suffice best-practices, which is currently known to be at least AES-256 keys being used. Encryption keys are stored protected on the smartcard.

Mutual SSL (see https://en.wikipedia.org/wiki/Mutual_authentication) is used providing mutual authentication between the communication module and the (robot) input device. It also provides mandatory communication encryption.

S/MIME (see https://en.wikipedia.org/wiki/S/MIME) is used for asynchronous communication, e.g. status notifications from communication module to authorized administrators / service staff.

The hosting operating system supports state of the art memory-related security functions (e.g. Address Space layout Randomization - ASLR, NX-Bit (see https://en.wikipedia.org/wiki/NX_bit)).

Memory access bases on a capability-based (see https://en.wikipedia.org/wiki/Capability-based_addressing) or comparable approach limiting access to memory and functions.

At the present moment, no similar approaches have been identified.

The main purpose of the present invention is to retrofit robots through a secure security module offering security services and (secure) connectivity. Most related inventions describe new tasks or functions for robots.

SiMKo 3 (see http://security.t-systems.com/solutions/mobile-simko) uses a similar overall approach, but public information shows that a microkernel is used that uses virtualized SW instances of operating system instead of HW features such as used by the ARM TrustZone approach. Furthermore, this system is dedicated for mobile and personal information management usage while our invention targets retrofitting of robots. Detailed information is not available for SiMKo 3 product.

The field of robot retrofitting is very small and only a few publications or products can be found and all of which are different from the present invention's approach of retrofitting a robot by connecting a secure communication module.

Solution using ARM TrustZone functionality are known in the mobile phone field, e.g. Samsung advertises the usage of ARM TrustZone functionality, with the main purpose being to protect use case related to mobile phone usage. However, as there is no detailed documentation available on this, the general use case appears to be that it is used to protect security-sensitive functions and data, meaning certain keys will be stored on the Samsung device using ARM TrustZone based functions.

The solution of the present invention addresses the field of robotics and related use cases and no similar solution is known in this field. Integrating a secure smartcard into such kind of solution provides a significant security improvement and no publicly described solutions in this field present a comparable approach.

Separation of execution environments on security systems will gain more and more importance but is not widely used, yet. Therefore, knowledge about this field is available only to a very small number of specialists. In connection with robotics, no approaches are known to the authors that use a similar basis. Robotics itself is a very complex with very few specialists working in this field.

A solution based on an ARM Platform using ARM TrustZone in combination with a smartcard for retrofitting robots is not obvious and cannot be invented by using standards means from this field. It requires sophisticated knowledge in the field of Robotics, Secure Platforms, Service Platforms used for Robotics, Secure Operations, Secure Smartcards and Secure Services.

### ADVANTAGEOUS TECHNICAL EFFECTS?

With each communication module having its own smartcard such that communication can be performed via mobile communication, the system of the present invention is able to improve the overall security with its multiple security features and further allows flexibility in the use of the robot.

In particular, several advantages result from the usage of the secure smartcard:
(i) it can be used to stored secrets (private keys, synchronous encryption keys, etc) in a very secure way.
(ii) Through the computational capabilities of the smartcard, all components can be verified for proper security functionality, including a possible random number generator (RNG) that will be handing over random numbers to the overall system. Attacking a normal computer system successfully will also lead to the ability to influence RNG functionality, which is not possible in the present invention. Storing the private key on the smart card also means that the "retrofitted" Robot will get an unique ID which is required for its interaction with other components / participants in the system.
(iii) Functionalities provided through the use of the private / public key pair includes:
   a. Private key: signing of data for showing origin of data. This is mandatory for all components in the system sending data (construction plans sent from input device).
   b. Private key: decrypting data that was directed to you while being encrypted using your public key.
   c. Public key: is offered in a registry or other applicable distribution mechanism to enable other to send you encrypted messages.
   d. Public key: is used to verify origin of signed message.

Usage of OPC-UA will enable the system to interact with state-of-the-art Machine-2-Machine communication systems, while offering a functionality set that will help retrofit robots on a functional level. No OPC-UA-based system built with security-focus is known to the authors. Security functionality included in OPC-UA mainly addresses standard communication encryption (HTTPS).

The combination of all security aspects in this system will protect every relevant domain within this system for preventing successful attacks beginning from boot stage and containing all stages at run time. This kind of system is required for future interconnected robot (re)use where no similar systems are known to the authors. Current R&D still focuses on elementary robot/communication functionality and architecture but does not cover relevant security aspects.

## Claims

1. A system of retrofitting industrial robots with secure communication, the system comprising
at least one industrial robot;
a robot input device configured to allow user to input commands to the at least one industrial robot;
a communication module connected to the at least one robot and configured to provide a secure communication between the robot input device, the communication module and the industrial robot;
a security smartcard configured to be integrated into the communication module,
wherein an operating system of the security smartcard is based on TeleSec Chipcard Operating System, TCOS,
wherein the communication module comprises a secure hardware platform that is configured to separate computer operations into a plurality of different execution domains in order to increase the security of the system,
wherein the secure hardware platform is configured to run
a: a secure operating system, Trusted Execution Environment, TEE for executing privileged operations; and
b: a normal operating system, Rich Execution Environment, REE for performing uncritical operations, and
wherein the communication module is adapted to use an Acorn RISC Machine, ARM, cortex-A hardware, which comprises an ARM TrustZone security functionality,
wherein the security smartcard is integrated into the communication module via the ARM TrustZone TEE.

2. The system according to claim 1,
wherein the communication module is configured to enable at least one industrial robot to receive commands and operational plans from a plurality of remote entities securely and to report status messages and monitoring data to the plurality of remote entities.

3. The system according to claim 1 or 2,
wherein the industrial robot is configured to be mechanically coupled to the communication module by a wire using a wired robot interface.

4. The system according to any one of claims 1 to 3,
wherein the industrial robot is configured to be computer controllable via a transcoding device; and
wherein the transcoding device is configured to translate computer commands into mechanical actions of the industrial robot.

5. The system according to any one of claims 1 to 4,
wherein the communication module further comprises a secure system, which includes a secure boot loader chain function;
a full disk encryption function;
a role-based access control function;
a certificate handling function; and
a communication authentication and encryption function.

6. The system according to any one of claims 1 to 5,
wherein the security smartcard comprises a two factor authentication, 2FA, and is configured to provide cryptographic operations.

7. The system according to claim 6, wherein the cryptographic operations comprises
a Random Number Generator, RNG, for appropriate level of randomness;
a de/encryption operation;
a secure storage of secrets or certificates within a dedicate secure storage area on the security smartcard.

8. The system according to any one of claims 1 to 7,
wherein a service platform is configured to be installed on the normal operating system, Rich Execution Environment, REE, and further configured to host services connected to service and function forwarders that lead to services and functions being offered by the secure operating system, Trusted Execution Environment, TEE.

9. The system according to any one of claims 1 to 8, wherein the robot input device is configured to
create new action plans for the industrial robot;
sign input commands for being set to the industrial robot;
receive status and/or monitoring messages from the robot and/or connect to corresponding services; and
handle secure certificate by using the smart card.

10. The system according to any one of claims 1 to 9,
wherein the communication module further comprises a baseband processor for providing baseband protection, and wherein the baseband processor includes a baseband firewall; a baseband monitor; an Over-the-Air, OTA, update module; a baseband integrity checker and an unsolicited messages detector.

11. The system according to any one of claims 1 to 10, wherein the communication module further comprises a plurality of boot loaders, wherein each boot loader comprises a cryptographic checksum of a previous boot loader, and wherein said cryptographic checksum is adapted to be verified at each start-up.

12. The system according to any one of claims 1 to 11, further comprising a Mutual Secure Sockets Layer, SSL, configured to provide mutual authentication between the communication module and the robot input device; and further configured to provide mandatory communication encryption.

13. The system according to any one of claims 1 to 12, further comprising a Secure/Multipurpose Internet Mail Extensions, S/MIME, for asynchronous communication such as status notification from communication module to authorized administrators.

## Patentansprüche

1. System zur Nachrüstung von Industrierobotern mit einer sicheren Kommunikation, wobei das System aufweist:
mindestens einen Industrieroboter;
eine Robotereingabevorrichtung, die konfiguriert ist, es einem Benutzer zu ermöglichen, Befehle in den mindestens einen Industrieroboter einzugeben;
ein Kommunikationsmodul, das mit dem mindestens einen Roboter verbunden und konfiguriert ist, eine sichere Kommunikation zwischen der Robotereingabevorrichtung, dem Kommunikationsmodul und dem Industrieroboter bereitzustellen;
eine Sicherheitschipkarte, die konfiguriert ist, in das Kommunikationsmodul integriert zu werden, wobei ein Betriebssystem der Sicherheitschipkarte auf dem TeleSec Chipcard Operating System, TCOS beruht,
wobei das Kommunikationsmodul eine sichere Hardwareplattform aufweist, die konfiguriert ist, Computeroperationen in eine Vielzahl von unterschiedlichen Ausführungsdomänen zu trennen, um die Sicherheit des Systems zu erhöhen,
wobei die sichere Hardwareplattform konfiguriert ist, auszuführen
a: eine sicheres Betriebssystem, Trusted Execution Environment, TEE zum Ausführen privilegierter Operationen; und
b: eine normales Betriebssystem, Rich Execution Environment, REE zum Ausführen unkritischer Operationen, und
wobei das Kommunikationsmodul eingerichtet ist, eine Acorn RISC Machine, ARM, Cortex-A-Hardware zu verwenden, die eine ARM TrustZone Sicherheitsfunktionalität aufweist,
wobei die Sicherheitschipkarte in das Kommunikationsmodul über die ARM TrustZone TEE integriert ist.

2. System nach Anspruch 1,
wobei das Kommunikationsmodul konfiguriert ist, es mindestens einem Industrieroboter zu ermöglichen, Befehle und Betriebspläne von einer Vielzahl entfernter Entitäten sicher zu empfangen und Statusmeldungen und Überwachungsdaten an die Vielzahl der entfernten Entitäten zu melden.

3. System nach Anspruch 1 oder 2,
wobei der Industrieroboter konfiguriert ist, durch eine Leitung mittels einer drahtgebundenen Roboterschnittstelle mechanisch mit dem Kommunikationsmodul gekoppelt zu sein.

4. System nach einem der Ansprüche 1 bis 3,
wobei der Industrieroboter konfiguriert ist, über eine Transcodierungsvorrichtung computersteuerbar zu sein; und
wobei die Transcodierungsvorrichtung konfiguriert ist, Computerbefehle in mechanische Aktionen des Industrieroboters zu übersetzen.

5. System nach einem der Ansprüche 1 bis 4,
wobei das Kommunikationsmodul ferner ein sicheres System aufweist, das aufweist:
eine sichere Urlader-Kettenfunktion;
eine vollständige Plattenverschlüsselungsfunktion;
eine rollenbasierte Zugangskontrollfunktion;
eine Zertifikathandhabungsfunktion; und
eine Kommunikationsauthentifikations- und Verschlüsselungsfunktion.

6. System nach einem der Ansprüche 1 bis 5,
wobei die Sicherheitschipkarte eine Zweifaktor-Authentifikation, 2FA aufweist und konfiguriert ist, kryptographische Operationen bereitzustellen.

7. System nach Anspruch 6,
wobei die kryptographischen Operationen aufweisen:
eine Zufallszahlengenerator, RNG, für ein geeignetes Zufälligkeitsniveau;
eine Ent-/Verschlüsselungsoperation;
einen sicheren Speicher von Geheimnissen oder Zertifikaten innerhalb eines zweckgebundenen sicheren Speicherbereichs auf der Sicherheitschipkarte.

8. System nach einem der Ansprüche 1 bis 7,
wobei eine Dienstplattform konfiguriert ist, auf dem normalen Betriebssystem, Rich Execution Environment, REE installiert zu werden, und ferner konfiguriert ist, Dienste zu hosten, die mit Dienst- und Funktionsweiterleitern verbunden sind, die zu Diensten und Funktionen führen, die durch das sichere Betriebssystem, Trusted Execution Environment, TEE angeboten werden.

9. System nach einem der Ansprüche 1 bis 8, wobei die Robotereingabevorrichtung konfiguriert ist:
neue Aktionspläne für den Industrieroboter zu erzeugen;
Eingangsbefehle zu signieren, die zum Industrieroboter geschickt werden sollen;
Status- und/oder Überwachungsnachrichten vom Roboter zu empfangen und/oder sich mit entsprechenden Diensten zu verbinden; und
ein sicheres Zertifikat mittels der Chipkarte zu handhaben.

10. System nach einem der Ansprüche 1 bis 9,
wobei das Kommunikationsmodul ferner einen Basisbandprozessor zur Bereitstellung eines Basisbandschutzes aufweist, und wobei der Basisbandprozessor eine Basisband-Firewall; einen Basisbandmonitor; ein Over-the-Air, OTA, Updatemodul; einen Basisbandintegritätsprüfer und einen Detektor für unerwünschte Nachrichten aufweist.

11. System nach einem der Ansprüche 1 bis 10, wobei das Kommunikationsmodul ferner eine Vielzahl von Urladern aufweist, wobei jeder Urlader eine kryptographische Prüfsumme eines vorhergehenden Urladers aufweist, und wobei die kryptographische Prüfsumme eingerichtet ist, bei jedem Start überprüft zu werden.

12. System nach einem der Ansprüche 1 bis 11, das ferner eine Mutual Secure Sockets Layer, SSL aufweist, die konfiguriert ist, eine gegenseitige Authentifikation zwischen dem Kommunikationsmodul und der Robotereingabevorrichtung bereitzustellen; und die ferner konfiguriert ist, eine zwingend erforderliche Kommunikationsverschlüsselung bereitzustellen.

13. System nach einem der Ansprüche 1 bis 12, das ferner Secure/Multipurpose Internet Mail Extensions, S/MIME, zur asynchronen Kommunikation wie eine Statusmeldung vom Kommunikationsmodul an autorisierte Administratoren aufweist.

## Revendications

1. Système d'adaptation de robots industriels pour une communication sécurisée, ledit système comprenant
au moins un robot industriel ;
un dispositif d'entrée de robot prévu pour permettre à l'utilisateur de saisir des commandes pour ledit au moins un robot industriel ;
un module de communication relié audit au moins un robot et prévu pour assurer une communication sécurisée entre le dispositif d'entrée de robot, le module de communication et le robot industriel ;
une carte à puce de sécurité prévue pour être intégrée au module de communication, le système d'exploitation de la carte à puce de sécurité étant basé sur TeleSec Chipcard Operating System, TCOS,
où le module de communication comprend une plateforme matérielle sécurisée prévue pour diviser des opérations informatiques en une pluralité de domaines d'exécution différents afin d'élever la sécurité du système,
où la plateforme matérielle sécurisée est prévue pour lancer
a : un système d'exploitation sécurisé, Trusted Execution Environment, TEE, pour l'exécution d'opérations privilégiées ; et
b : un système d'exploitation normal, Rich Execution Environment, REE, pour l'exécution d'opérations non critiques, et
où le module de communication est prévu pour utiliser un processeur cortex-A Acorn RISC Machine, ARM, lequel comprend une fonctionnalité de sécurité ARM TrustZone, où la carte à puce de sécurité est intégrée au module de communication par l'intermédiaire du TEE ARM TrustZone.

2. Système selon la revendication 1,
où le module de communication est prévu pour permettre à au moins un robot industriel de recevoir de manière sécurisée des commandes et des plans opérationnels d'une pluralité d'entités distantes et de transmettre des messages d'état et des données de surveillance à la pluralité d'entités distantes.

3. Système selon la revendication 1 ou la revendication 2,
où le robot industriel est prévu pour être raccordé mécaniquement au module de communication par un fil au moyen d'une interface de robot câblée.

4. Système selon l'une des revendications 1 à 3,
où le robot industriel est prévu pour pouvoir être commandé par ordinateur par l'intermédiaire d'un dispositif de transcodage ; et
où le dispositif de transcodage est prévu pour traduire des commandes d'ordinateur en actions mécaniques du robot industriel.

5. Système selon l'une des revendications 1 à 4,
où le module de communication comprend en outre un système sécurisé comportant une fonction de chaîne de chargeur d'amorçage sécurisée ;
une fonction de cryptage complet de disque ;
une fonction de contrôle d'accès basé sur les rôles ;
une fonction de gestion de certificats ; et
une fonction d'authentification et de cryptage de communication.

6. Système selon l'une des revendications 1 à 5,
où la carte à puce de sécurité comprend une authentification à double facteurs, 2FA, et est prévue pour assurer des opérations cryptographiques.

7. Système selon la revendication 6,
où les opérations cryptographiques comprennent
un générateur de nombres aléatoires, RNG, pour un niveau approprié de caractère aléatoire ;
une opération de décryptage/cryptage ;
un stockage sécurisé de secrets ou de certificats dans une zone de stockage sécurisée dédiée sur la carte à puce de sécurité.

8. Système selon l'une des revendications 1 à 7,
où une plate-forme de service est prévue pour être installée sur le système d'exploitation normal, Rich Execution Environment, REE, et est en outre prévue pour héberger des services reliés à des transmetteurs de services et fonctions menant à des services et fonctions offerts par le système d'exploitation sécurisé, Trusted Execution Environment, TEE.

9. Système selon l'une des revendications 1 à 8, où le dispositif d'entrée de robot est prévu pour
créer de nouveaux plans d'action pour le robot industriel ;
signer des commandes d'entrées pour le réglage du robot industriel ;
recevoir des messages d'état et/ou de surveillance du robot et/ou établir une connexion avec des services correspondants ; et
gérer un certificat sécurisé au moyen de la carte à puce.

10. Système selon l'une des revendications 1 à 9,
où le module de communication comprend en outre un processeur de bande de base destiné à assurer une protection de bande de base, et où ledit processeur de bande de base comporte un pare-feu de bande de base ; un moniteur de bande de base ; un module de mise à jour Over-the-Air, OTA ; un contrôleur d'intégrité de bande de base et un détecteur de messages non sollicités.

11. Système selon l'une des revendications 1 à 10, où le module de communication comprend en outre une pluralité de chargeurs d'amorçage, chaque chargeur d'amorçage comprenant une somme de contrôle cryptographique d'un chargeur d'amorçage précédent, ladite somme de contrôle cryptographique étant prévue pour être vérifiée à chaque démarrage.

12. Système selon l'une des revendications 1 à 11, comprenant en outre une couche de sockets sécurisée, SSL, prévue pour assurer une authentification réciproque entre le module de communication et le dispositif d'entrée de robot ; et prévue en outre pour assurer un cryptage de communication obligatoire.

13. Système selon l'une des revendications 1 à 12, comprenant en outre une extension multiusages sécurisée pour la messagerie, S/MIME, pour une communication asynchrone telle qu'une notification d'état du module de communication à des administrateurs autorisés.
